# FASCICULE DE BREVET EUROPEEN

(11) **EP 1 142 182 B1**
(45) Date de publication et mention de la délivrance du brevet: **18.05.2005**
(21) Numéro de dépôt: 99958301.6
(22) Date de dépôt: 10.12.1999
(51) Int. Cl.: H04L 1/00

(54) **DISPOSITF ET PROCEDE DE TRAITEMENT D'UNE SEQUENCE DE PAQUETS D'INFORMATION**
VORRICHTUNG UND VERFAHREN ZUR VERARBEITUNG EINER PAKETSEQUENZ
DEVICE AND METHOD FOR PROCESSING A DATA PACKET SEQUENCE

(30) Priorité: 14.12.1998 FR 9815757
(43) Date de publication de la demande: 10.10.2001
(73) Titulaire: Netcentrex, 14000 Caen (FR)
(72) Inventeur: HERSENT, Olivier, F-14000 Caen (FR)
(74) Mandataire: Loisel, Bertrand
(86) Numéro de dépôt international: PCT/FR1999/003099
(87) Numéro de publication internationale: WO 2000/036779

(56) Documents cités:
- US-A- 5 835 726
- TED DOTY: "A FIREWALL OVERVIEW" CONNEXIONS, vol. 9, no. 7, 1 juillet 1995 (1995-07-01), pages 20-23, XP000564023 ISSN: 0894-5926
- BAUSPIESS F ET AL: "REQUIREMENTS FOR CRYPTOGRAPHIC HASH FUNCTIONS" COMPUTERS & SECURITY INTERNATIONAL JOURNAL DEVOTED TO THE STUDY OF TECHNICAL AND FINANCIAL ASPECTS OF COMPUTER SECURITY, vol. 11, no. 5, 1 septembre 1992 (1992-09-01), pages 427-437, XP000296996 ISSN: 0167-4048

## Description

La présente invention concerne les réseaux de transmission par paquets. Elle s'applique notamment, mais non exclusivement, aux réseaux fonctionnant selon le protocole Intemet (IP).

L'invention peut être mise en oeuvre au niveau des interfaces extérieures de routeurs du réseau, pour effectuer des analyses et des traitements des flux de données transitant par ces interfaces.

On désigne ici par fonctions de « police » divers traitements ou contrôles effectués au niveau d'une telle interface sur des flux de données qui la traversent. A titre d'exemples non limitatifs, on peut citer le comptage des paquets échangés entre une adresse de source et une adresse de destination données, l'attribution de priorités à certains paquets, des traductions d'adresse, la destruction sélective de certains paquets, etc.

Ces fonctions de police peuvent s'inscrire dans un cadre contractuel entre un abonné et un gestionnaire du réseau. Cela peut par exemple être le cas de fonctions relatives au contrôle de débit, aux autorisations d'accès à certains sites reliés au réseau, à la mise en oeuvre de protocoles de réservation tels que RSVP,.... Elles peuvent également s'inscrire dans le cadre de l'organisation interne d'un réseau public ou privé, par exemple pour contrôler certains accès.

Les routeurs actuels offrent un jeu de commandes de configuration permettant d'appliquer de telles fonctions de police. On définit ainsi un filtre relatif à certains champs de l'en-tête des paquets pour identifier le ou les flux concernés, le filtre étant associé à une fonction particulière opérée sur les paquets correspondants. Ces filtres, ou "access list", présentent certaines rigidités. Ainsi, il n'est pas possible d'enchaîner deux filtres, l'un précisant un tri sur les paquets sélectionnés par le premier. Ces filtres sont construits sur un modèle séquentiel : le premier filtre qui convient pour un paquet donné est retenu à l'exclusion des filtres suivants qui pourraient également convenir. Il est donc impossible d'appliquer plusieurs règles et traitements associés à un même flux (par exemple de compter tous les paquets émis selon le protocole TCP sur un port x et de compter tous les flux TCP vers un serveur donné, y compris ceux transitant vers le port x).

Pour contourner certaines de ces limitations, des commandes effectuant plusieurs actions conjointes ont été définies. Ces solutions ne procurent qu'une souplesse relative et compliquent notablement le langage de configuration des routeurs. Il manque également un cadre homogène pour gérer les extensions futures des fonctions de police à assurer.

Le document US 5 835 726 décrit un système pour trier des paquets dans un flux et ainsi modifier de façon sélective des paquets dans un réseau informatique.

Le document "A Firewall Overview", de Ted Doty, CONNECTIONS, Vol. 9, n° 7, 1^{er} juillet 1995, pages 20-23, XP000564023, mentionne une opération de filtrage de paquets permettant de bloquer ou non un paquet, en fonction de l'adresse de destination/source ou du numéro de port.

Un but de la présente invention est de proposer un mode de traitement de séquences de paquets d'information qui offre une grande souplesse de configuration sans augmenter de façon significative la complexité de l'interface de configuration.

L'invention propose ainsi un dispositif de traitement d'une séquence de paquets d'information, comprenant une mémoire de paquets, organisée en pile, dans laquelle les paquets de la séquence sont rangés en association avec des étiquettes de traitement respectives, un ensemble de modules de traitement, et des moyens de supervision recevant l'étiquette de traitement associée à chaque paquet extrait de la mémoire de paquets et activant l'un des modules de traitement sélectionné en fonction de l'étiquette reçue, le module activé assurant un traitement élémentaire du paquet extrait. Le traitement élémentaire assuré par au moins un des modules de traitement comporte la mise en association du paquet extrait avec une étiquette modifiée conformément à une table de traduction d'étiquettes, le paquet traité étant ensuite rangé à nouveau dans la mémoire de paquets en association avec l'étiquette modifiée.

Le dispositif permet d'enchaîner des fonctions de police selon un graphe arbitraire de traitements élémentaires agissant sur des flux de données identifiés par les étiquettes de traitement Ceci procure un cadre flexible pour gérer la configuration de l'interface et les éventuelles extensions de protocole.

La performance du dispositif est indépendante du nombre d'enchaînements de traitements élémentaires susceptibles d'être effectués sur les flux transitant par l'interface, et proportionnelle au plus complexe de ces enchaînements. En contrepartie, la technique utilisée consomme plus de mémoire qu'une implémentation séquentielle classique.

Un autre aspect de la présente invention se rapporte à un procédé de traitement d'une séquence de paquets d'information, dans lequel on range les paquets de la séquence dans une mémoire de paquets organisée en pile, en association avec des étiquettes de traitement respectives, on examine l'étiquette de traitement associée à chaque paquet extrait de la mémoire de paquets pour activer un module de traitement sélectionné en fonction de l'étiquette reçue parmi un ensemble de modules de traitement, le module activé assurant un traitement élémentaire du paquet extrait. Le traitement élémentaire assuré par au moins un des modules de traitement comporte la mise en association du paquet extrait avec une étiquette modifiée conformément à une table de traduction d'étiquettes, le paquet traité étant ensuite rangé à nouveau dans la mémoire de paquets en association avec l'étiquette modifiée.

D'autres particularités et avantages de la présente invention apparaîtront dans la description ci-après d'exemples de réalisation non limitatifs, en référence aux dessins annexés, dans lesquels :
- la figure 1 est un schéma d'un réseau où l'invention peut être mise en oeuvre ;
- la figure 2 est un schéma synoptique d'un routeur d'accès d'une installation privée de ce réseau ;
- la figure 3 est un schéma synoptique d'un dispositif de traitement de flux faisant partie d'une interface du routeur de la figure 2 ; et
- la figure 4 est un graphe de traitements élémentaires assurés par le dispositif de la figure 3.

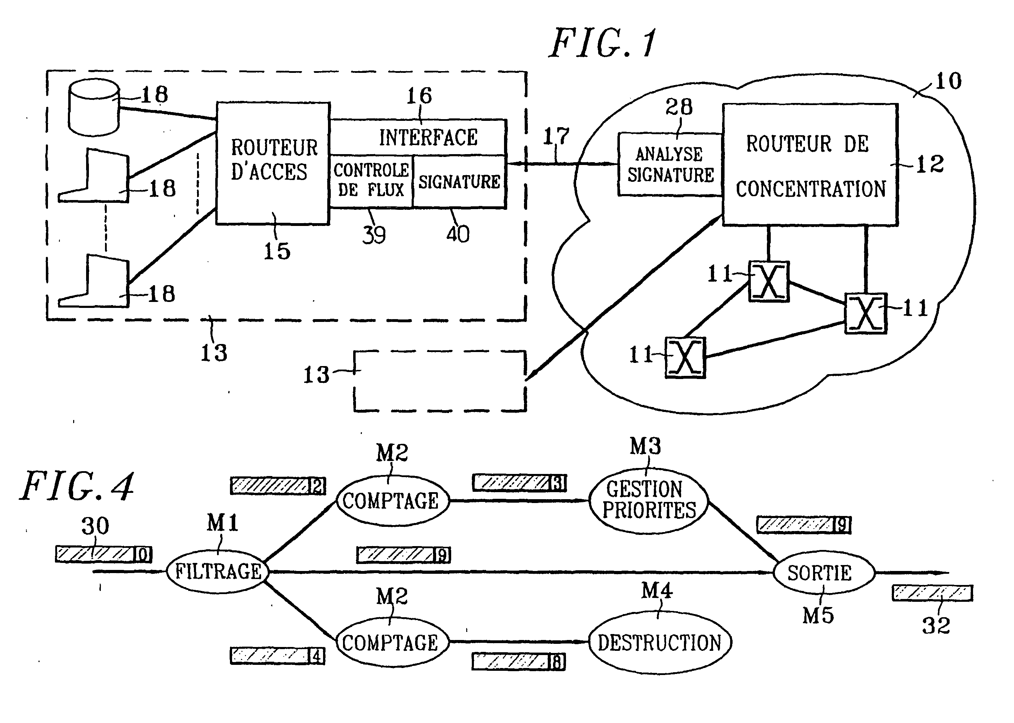

La figure 1 montre un réseau partagé de grande étendue (WAN) 10 comportant un certain nombre de routeurs et commutateurs interconnectés 11,12. On considère ici le cas où le réseau partagé 10 fonctionne selon le protocole IP. Un certain nombre des routeurs sont des routeurs de concentration 12 auxquels sont reliées des installations privées 13.

Une installation privée d'abonné 13 est typiquement reliée au réseau partagé 10 au moyen d'un routeur d'accès 15 dont l'une des interfaces 16 est reliée à une ligne 17 de transmission depuis et vers le routeur de concentration 12. Le routeur d'accès 15 peut être relié à d'autres routeurs de l'installation privée 13 ou à des serveurs ou terminaux 18 de cette installation, au moyen d'autres interfaces non représentées sur la figure 1.

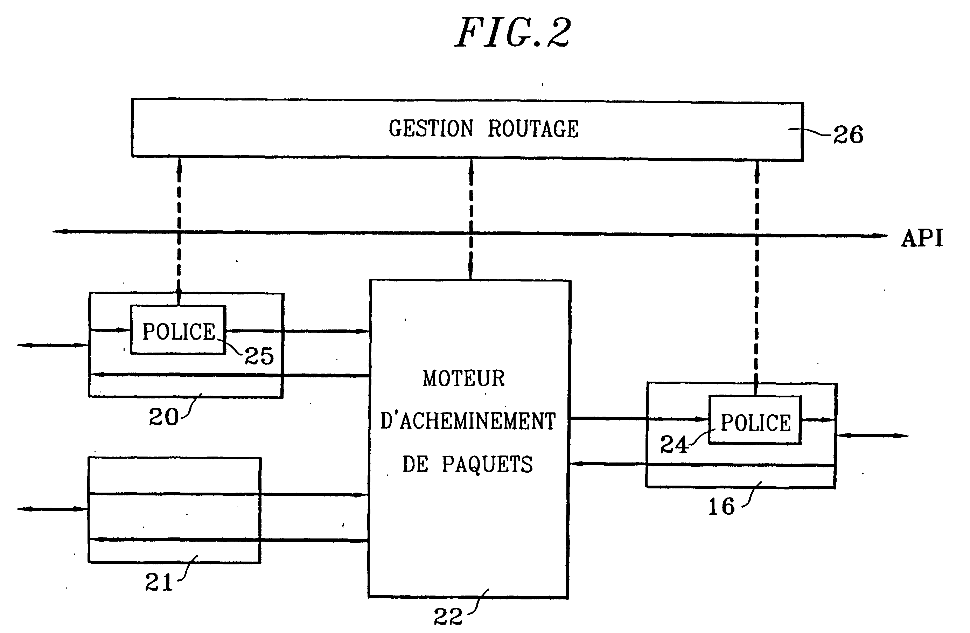

La figure 2 montre un exemple d'architecture du routeur d'accès 15. L'interface extérieure 16, ainsi que les interfaces 20,21 avec le reste de l'installation privée 13, sont reliées au coeur du routeur consistant en un moteur d'acheminement de paquets 22 (« packet forwarding engine »). Le moteur d'acheminement 22 achemine les paquets d'une interface vers une autre sur la base des champs d'adresse et de port contenus dans les en-têtes des paquets conformément au protocole IP et à ses éventuelles extensions (TCP, UDP,...), en se reportant à des tables de routage.

Certaines des interfaces du routeur d'accès 15 sont pourvues, dans l'un seulement ou dans les deux sens de transmission, de dispositifs de traitement, ou processeurs de flux, 24,25 assurant des fonctions de police. Dans l'exemple illustratif de la figure 2, le dispositif 24 équipe l'interface extérieure 16 dans le sens sortant, et le dispositif 25 équipe une autre interface 20 dans le sens entrant

Le routeur d'accès est supervisé par une unité de gestion 26 pouvant consister en un micro-ordinateur ou une station de travail qui exécute un logiciel de routage servant notamment à configurer la table de routage du moteur d'acheminement 22 et les processeurs de flux 24,25 et à échanger avec eux des informations de contrôle ou de protocole. Ces commandes et échanges se font par l'intermédiaire d'une interface logicielle de programmation (API) appropriée.

La plupart des logiciels de routage et d'acheminement de paquets existants sont facilement disponibles dans l'environnement Unix, mais leur performance est habituellement limitée à cause des interruptions fréquentes du système d'exploitation. Il est beaucoup plus rapide d'utiliser un système d'exploitation en temps réel tel que VxWorks, mais cela complique la mise en place du logiciel de routage.

Le rôle des processeurs de flux 24,25 est d'assister le système d'exploitation non-temps réel (tel qu'Unix), sur la base duquel fonctionne l'unité de gestion 26, dans les tâches complexes de manipulation des flux qui requièrent des performances en temps réel (acheminement, filtrage, chiffrement... ). Ces processeurs mettent en oeuvre un certain nombre d'outils de manipulation des flux qui peuvent être reliés dynamiquement suivant toute combinaison pour effectuer la tâche requise. Cette configuration peut être effectuée à travers le système d'exploitation Unix par appel des fonctions d'API, ce qui facilite largement la mise en place de nouvelles fonctionnalités par le programmeur.

Comme illustré schématiquement par la figure 1, l'une des tâches effectuées par le processeur de flux 24 de l'interface extérieure 16 du routeur d'accès 15 consiste à émettre chaque paquet vers le routeur de concentration 12 en lui adjoignant une signature numérique (bloc 40). Cette signature atteste que les paquets en question ont été soumis aux autres opérations de contrôle de flux (bloc 39) effectuées par le processeur 24.

- L'interface correspondante 28 du routeur de concentration 12 comporte un module d'analyse des paquets reçus sur la ligne 17 afin de s'assurer de la présence de la signature.

Cette technique de signature permet avantageusement de décentraliser les opérations de contrôle de flux nécessaires aux relations contractuelles entre le gestionnaire du routeur de concentration 12, qui fournit le service de raccordement au réseau partagé 10, et les abonnés dont les installations 13 sont reliées à ce routeur de concentration 12. Dans les réalisations classiques, ces opérations de contrôle de flux sont effectuées au niveau du routeur de concentration. Il en résulte une complexité considérable du routeur de concentration lorsqu'il est raccordé à d'assez nombreuses installations privées, et un manque de souplesse pour les abonnés lorsque des modifications sont requises.

Le fait d'effectuer ces opérations de contrôle de flux au niveau des routeurs d'accès 15 procure à cet égard une grande souplesse. La signature des paquets garantit alors au fournisseur de service que la ligne 17 ne lui envoie pas de paquets valides qui échapperaient au cadre contractuel avec l'abonné. Si un tel paquet venait à apparaître, l'interface 28 du routeur de concentration 12 l'éliminerait simplement après avoir constaté l'absence de la signature adéquate.

Diverses méthodes classiques peuvent être utilisées pour construire et analyser la signature des paquets, sur la base d'un secret partagé entre les routeurs 12 et 15. La signature peut notamment avoir la forme d'un mot de code ajouté au contenu du paquet, et calculé sur la base de tout ou partie de ce contenu et d'une clé secrète, le calcul étant effectué à l'aide d'une fonction extrêmement difficile à inverser pour récupérer la clé secrète. On peut ainsi utiliser une technique de hachage du contenu du paquet, ou d'une partie seulement de ce contenu, par exemple un hachage MD5 (voir R. Rivest, RFC 1231, « The MD5 Message Digest Algorithm »).

On peut également utiliser une méthode de chiffrement pour former la signature des paquets. Le contenu du paquet est alors chiffré à l'aide d'une clé privée, l'interface 28 du routeur de concentration assurant le déchiffrement correspondant à l'aide d'une clé publique ou privée. Les paquets non chiffrés, ou chiffrés au moyen d'une mauvaise clé sont alors détruits au niveau de l'interface 28.

En option, on peut prévoir que l'interface 28 - du routeur de concentration signe également les paquets qu'elle émet sur la ligne 17, et que l'interface 16 du routeur d'accès vérifie cette signature pour s'assurer de la validité des paquets reçus.

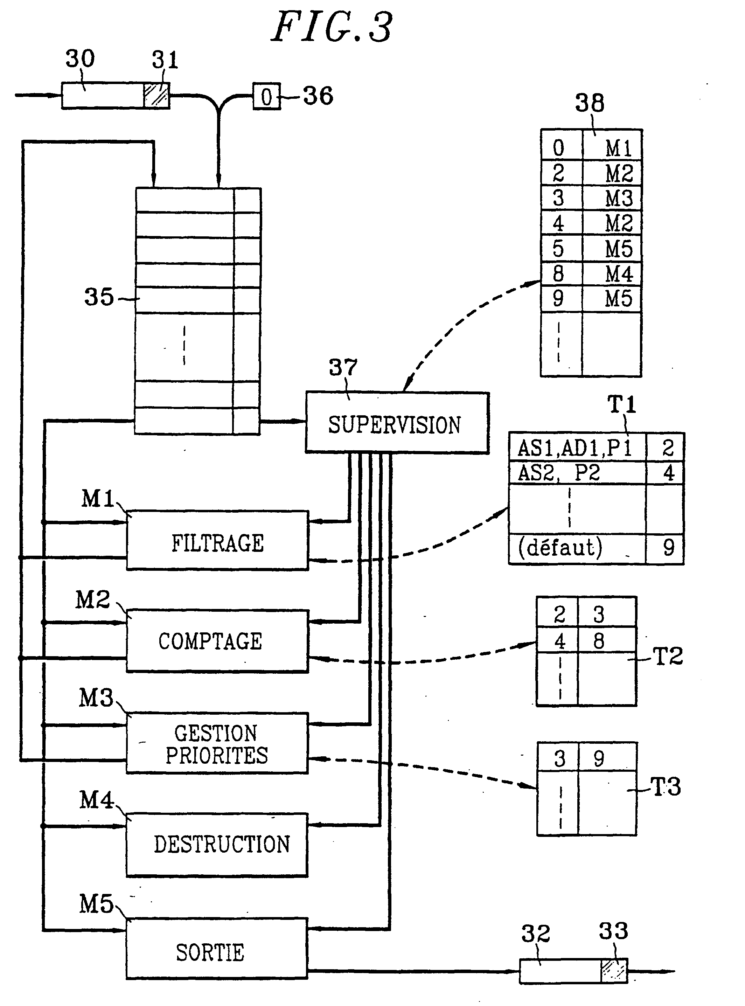

La figure 3 montre l'organisation d'un processeur de flux 24 ou 25 d'une interface du routeur d'accès 15.

Le processeur de flux reçoit une séquence de paquets entrants 30 comportant chacun un en-tête 31 conformément au protocole IP, et délivre une séquence de paquets sortants 32 ayant un en-tête 33 après avoir effectué certains traitements élémentaires dont la nature dépend des flux de données concernés.

Les paquets entrants 30 sont rangés dans une mémoire de paquets 35 organisée en pile de type premier entré - premier sorti (FIFO). Chaque paquet est fourni à la mémoire 35 avec une étiquette de traitement 36. L'étiquette de traitement a initialement une valeur déterminée (0 dans l'exemple représenté) pour les paquets entrants 30.

Le processeur de flux est supervisé par une unité 37 qui coopère avec une table 38 permettant d'associer un module de traitement particulier à chaque valeur de l'étiquette de traitement. Dans l'exemple simplifié représenté sur la figure 3, le processeur de flux comporte un ensemble de cinq modules de traitement M1-M5 opérant des traitements élémentaires de nature différente.

Après l'exécution d'un traitement élémentaire, l'unité de supervision 37 consulte la mémoire de paquets 35. Si celle-ci n'est pas vide, un paquet en est extrait suivant l'organisation FIFO. L'unité de supervision 37 consulte la table 38 pour déterminer quel module de traitement correspond à l'étiquette de ce paquet. L'unité 37 active alors le module en question pour qu'il effectue le traitement élémentaire correspondant. Dans certains cas, ce traitement élémentaire peut entraîner une modification du contenu du paquet, notamment de son en-tête.

On comprendra que l'« extraction » du paquet à laquelle il est fait référence est une extraction au sens logique de la mémoire FIFO. Le paquet n'est pas nécessairement enlevé de la mémoire. Les adresses des paquets dans la mémoire 35 peuvent être gérées de façon classique au moyen de pointeurs pour respecter l'organisation FIFO. Le module de traitement activé peut disposer simplement de l'adresse du paquet courant pour effectuer les lectures, analyses, modifications ou suppressions requises le cas échéant.

Le premier module de traitement M1, associé à l'étiquette initiale 0, est un module de filtrage qui analyse les champs d'adresse et/ou de définition de protocole, et/ou de port de l'en-tête IP des paquets. A l'aide d'une table d'association T1, le module de filtrage M1 délivre une seconde étiquette de traitement qui identifie un enchaînement de traitements élémentaires qui devront ensuite être effectués sur le paquet. Après avoir déterminé la seconde étiquette de traitement pour le paquet extrait de la mémoire 35, le module de filtrage M1 range à nouveau le paquet dans la mémoire 35, avec la seconde étiquette de traitement. Le traitement élémentaire suivant sera alors exécuté au moment où le paquet sera de nouveau extrait de la mémoire.

Le module M2 est un module de comptage des paquets relatifs à certains flux. Dans le cas de la table d'association 38 représentée sur la figure 3, ce module M2 est appelé pour les étiquettes de traitement 2 et 4. Lorsqu'il traite un paquet, le module M2 incrémente un compteur avec le nombre d'octets du paquet, ou encore avec la valeur 1 dans le cas d'un compteur de paquets. Le compteur peut être sécurisé, notamment s'il sert à la facturation de l'abonné par le gestionnaire du réseau 10. Dans le cas d'un compteur sécurisé, des requêtes sont régulièrement faites au fournisseur d'accès pour obtenir des crédits de transmission, les paquets considérés étant détruits si le crédit est épuisé.

Le module M3 de la figure 3 est un module de gestion de priorités. Dans le cas de la table d'association 38 représentée sur la figure 3, ce module M3 est appelé pour l'étiquette de traitement 3. Le module M3 opère sur le champ TOS ("Type Of Service") de l'en-tête IP des paquets. Le TOS est utilisé dans le réseau pour gérer des priorités d'acheminement afin de fournir une certaine qualité de service sur certaines liaisons. Le champ TOS peut être changé selon des tables préenregistrées. Ces tables peuvent être définies sous le contrôle du fournisseur d'accès pour éviter que des paquets soient transmis avec une priorité élevée de façon inappropriée, ce qui pourrait perturber le réseau.

Le traitement élémentaire effectué en dernier sur un paquet de la mémoire 35 est soit sa destruction (module M4 activé par l'étiquette 8), soit sa remise vers la sortie du processeur de flux (module M5 activé par l'étiquette 5 ou 9). Le module M4 peut être utilisé pour détruire des paquets ayant une certaine destination et/ou une certaine provenance.

Les modules M2 et M3, qui ne terminent pas les traitements à assurer pour un paquet (sauf cas de destruction), fonctionnent chacun avec une table de traduction d'étiquette T2,T3. Cette table de traduction désigne, pour l'étiquette de traitement extraite de la mémoire 35 avec le paquet courant, une autre étiquette de traitement désignant le traitement élémentaire suivant à assurer. Le traitement élémentaire assuré par ce module M2 ou M3 se termine par la mise en association du paquet avec cette autre étiquette de traitement et la réinjection du paquet ainsi traité dans la mémoire 35.

C'est ainsi qu'on peut effectuer des combinaisons de traitements très variées sur les différents flux de données traversant le processeur.

La figure 4 montre un exemple simplifié correspondant aux tables 38,T1-T3 représentées sur la figure 3. Le paquet entrant 30, associé à la première étiquette 0 est d'abord soumis au filtrage opéré par le module M1.

Dans le cas particulier considéré, le processeur de flux 24 compte les paquets émis depuis une adresse source AS1 vers une adresse de destination AD1 et un port P1, et modifie le champ TOS de ces paquets avant de les délivrer sur la ligne 17, ce qui correspond à la branche supérieure du graphe de la figure 4. D'autre part, le processeur de flux 24 compte les paquets issus d'une adresse de source AS2 vers un port P2 avant de les détruire, ce qui correspond à la branche inférieure de la figure 4. Les autres paquets sont simplement délivrés vers la ligne 17. La valeur par défaut (9) de l'étiquette de traitement retournée par le module M1 désigne donc simplement le module de sortie M5. Si le module M1 détecte dans le paquet extrait de la mémoire 35 la combinaison AS1, AD1, P1 dans les champs d'adresse et de port pertinents, il retourne le paquet avec l'étiquette de traitement 2. Si les valeurs AS2, P2 sont détectées dans les champs d'adresse et de port, c'est l'étiquette 4 qui est retournée avec le paquet.

Ces étiquettes 2 et 4 correspondent toutes deux au module de comptage M2. L'étiquette va également désigner pour ce module l'adresse mémoire du compteur devant être incrémenté. La table T2 avec laquelle fonctionne le module M2 permettra en fin de traitement d'effectuer le renvoi vers le module suivant à activer (M3 désigné par l'étiquette 3 pour les paquets dont le TOS doit être changé, M4 désigné par l'étiquette 8 pour les paquets à détruire).

Le module M3 reçoit des paquets avec l'étiquette de traitement 3, et les retourne avec l'étiquette 9 après avoir opéré la modification requise du champ TOS.

A partir de cet exemple simplifié, on voit que le processeur de flux permet, à partir de l'identification d'un flux par le module de filtrage M1, d'effectuer diverses combinaisons de traitements élémentaires d'une manière relativement simple et rapide.

Un avantage principal de cette façon de procéder est la souplesse des opérations de configuration du processeur de flux. Les tables 38,T1-T3 qui définissent un graphe quelconque de traitements élémentaires, tel que celui représenté sur la figure 4, peuvent être construites de manière relativement simple et avec une faible contrainte de temps réel au moyen de l'unité de gestion 36 à travers l'API. Il en est de même pour les informations permettant aux modules M1-M5 d'effectuer leurs traitements élémentaires (description des comptages à opérer par le module M2, façon de changer les champs TOS par le module M3, ... ).

Dans la pratique, le processeur de flux pourra comprendre divers modules de traitement autres que ceux représentés à titre d'exemple sur les figures 3 et 4, suivant les besoins de chaque installation particulière (par exemple, module de gestion des files d'attente de sortie, module de traduction d'adresses, ... ).

La fonction de signature des paquets émis, décrite précédemment, peut faire partie du traitement élémentaire assuré par le module de sortie M5. Dans une réalisation typique du routeur d'accès, le processeur de flux 24 sera inclus dans un circuit intégré d'application spécifique (ASIC) organisé autour d'un coeur de microcontrôleur. Cette réalisation permet qu'il n'y ait aucun accès physique entre les modules de contrôle de flux 39 (du moins ceux qui concernent les relations entre l'abonné et le gestionnaire du réseau 10) et le module M5 qui se charge de la signature des paquets, correspondant au bloc 40 de la figure 1. Ceci améliore la sécurité de la liaison du point de vue du gestionnaire du réseau.

## Revendications

1. Dispositif de traitement d'une séquence de paquets d'information, **caractérisé en ce qu'**il comprend une mémoire de paquets (35), organisée en pile, dans laquelle les paquets (30) de la séquence sont rangés en association avec des étiquettes de traitement respectives (36), un ensemble de modules de traitement (M1-M5), et des moyens de supervision (37) recevant l'étiquette de traitement associée à chaque paquet extrait de la mémoire de paquets et activant l'un des modules de traitement sélectionné en fonction de l'étiquette reçue, le module activé assurant un traitement élémentaire du paquet extrait, et **en ce que** le traitement élémentaire assuré par au moins un des modules de traitement (M2,M3) comporte la mise en association du paquet extrait avec une étiquette modifiée conformément à une table de traduction d'étiquettes (T2,T3), le paquet traité étant ensuite rangé à nouveau dans la mémoire de paquets (35) en association avec l'étiquette modifiée.

2. Dispositif selon la revendication 1, dans lequel une première étiquette de traitement est associée initialement à chaque paquet (30) de la séquence, dans lequel les moyens de supervision (37) activent un module de filtrage (M1) faisant partie de l'ensemble de modules de traitement en réponse à la réception de la première étiquette de traitement, et dans lequel le traitement élémentaire assuré par le module de filtrage comporte une analyse d'un en-tête du paquet extrait et la mise en association du paquet avec une seconde étiquette de traitement dépendant du résultat de l'analyse.

3. Dispositif selon la revendication 1 ou 2, dans lequel de l'ensemble de modules de traitement comprend un module de sortie (M5) qui transmet le paquet extrait vers une sortie du dispositif, avec une signature basée sur un secret partagé avec un routeur de concentration (12) d'un réseau de télécommunication (10), authentifiant que le paquet a été soumis aux traitements effectués par le dispositif (24).

4. Procédé de traitement d'une séquence de paquets d'information, **caractérisé en ce qu'**on range les paquets (30) de la séquence dans une mémoire de paquets (35) organisée en pile, en association avec des étiquettes de traitement respectives (36), on examine l'étiquette de traitement associée à chaque paquet extrait de la mémoire de paquets pour activer un module de traitement sélectionné en fonction de l'étiquette reçue parmi un ensemble de modules de traitement (M1-M5), le module activé assurant un traitement élémentaire du paquet extrait, et **en ce que** le traitement élémentaire assuré par au moins un des modules de traitement (M2,M3) comporte la mise en association du paquet extrait avec une étiquette modifiée conformément à une table de traduction d'étiquettes (T2,T3), le paquet traité étant ensuite rangé à nouveau dans la mémoire de paquets en association avec l'étiquette modifiée.

5. Procédé selon la revendication 4, dans lequel, après avoir été soumis à différents traitements élémentaires, chaque paquet est délivré avec une signature basée sur un secret partagé avec un routeur de concentration (12) d'un réseau de télécommunication (10), authentifiant que le paquet a été soumis auxdits traitements élémentaires.

## Patentansprüche

1. Vorrichtung zur Verarbeitung einer Folge von Informationspaketen, **dadurch gekennzeichnet, dass** sie einen als Stapelspeicher organisierten Paketspeicher (35), in dem die Pakete (30) der Folge in Zuordnung zu Verarbeitungs-Kennsätzen (36) eingeordnet sind, eine Gruppe von Verarbeitungsmodulen (M1-M5) und Überwachungsmittel (37) aufweist, die den jedem aus dem Paketspeicher entnommenen Paket zugeordneten Verarbeitungs-Kennsatz empfangen und eines der Verarbeitungsmodule aktivieren, das in Abhängigkeit vom empfangenen Kennsatz ausgewählt wird, wobei der aktivierte Modul eine Elementarverarbeitung des entnommenen Pakets gewährleistet, und dass die von mindestens einem der Verarbeitungsmodule (M2, M3) gewährleistete Elementarverarbeitung die Zuordnung des entnommenen Pakets zu einem Kennsatz enthält, der entsprechend einer Kennsatz-Übersetzungstabelle (T2, T3) verändert wurde, wobei das verarbeitete Paket anschließend in Verbindung mit dem veränderten Kennsatz erneut im Paketspeicher (35) eingeordnet wird.

2. Vorrichtung nach Anspruch 1, bei der zu Beginn jedem Paket (30) der Folge ein erster Verarbeitungs-Kennsatz zugeordnet ist, bei der die Überwachungsmittel (37) einen Filtermodul (M1), der Teil der Gruppe von Verarbeitungsmodulen ist, als Reaktion auf dem Empfang des ersten Verarbeitungs-Kennsatzes aktivieren, und bei der die vom Filtermodul gewährleistete Elementarverarbeitung eine Analyse eines Vorspanns des entnommenen Pakets und die Zuordnung des Pakets zu einem zweiten Verarbeitungs-Kennsatz enthält, der vom Ergebnis der Analyse abhängt.

3. Vorrichtung nach Anspruch 1 oder 2, bei der die Gruppe von Verarbeitungsmodulen einen Ausgangsmodul (M5) aufweist, der das entnommene Paket zu einem Ausgang der Vorrichtung mit einer Signatur überträgt, die auf einem gemeinsamen Geheimnis mit dem Konzentrationsrouter (12) eines Telekommunikationsnetzes (10) beruht und die authentifiziert, dass das Paket den von der Vorrichtung (24) durchgeführten Verarbeitungen unterzogen wurde.

4. Verfahren zur Verarbeitung einer Folge von Informationspaketen, **dadurch gekennzeichnet, dass** die Pakete (30) der Folge in einem als Stapelspeicher organisierten Paketspeicher (35) in Zuordnung zu Verarbeitungs-Kennsätzen (36) eingeordnet werden, dass der jedem aus dem Paketspeicher entnommenen Paket zugeordnete Verarbeitungs-Kennsatz untersucht wird, um einen in Abhängigkeit vom empfangenen Kennsatz aus einer Gruppe von Verarbeitungsmodulen (M1-M5) ausgewählten Verarbeitungsmodul zu aktivieren, wobei der aktivierte Modul eine Elementarverarbeitung des entnommenen Pakets gewährleistet, und dass die von mindestens einem der Verarbeitungsmodule (M2, M3) gewährleistete Elementarverarbeitung das Zuordnen des entnommenen Pakets zu einem entsprechend einer Kennsatz-Übersetzungstabelle (T2, T3) veränderten Kennsatz enthält, wobei das verarbeitete Paket anschließend in Verbindung mit dem veränderten Kennsatz erneut im Paketspeicher eingeordnet wird.

5. Verfahren nach Anspruch 4, bei dem jedes Paket, nachdem es verschiedenen Elementarverarbeitungen unterzogen wurde, mit einer Signatur geliefert wird, die auf einem gemeinsamen Geheimnis mit einem Konzentrationsrouter (12) eines Telekommunikationsnetzes (10) beruht und die authentifiziert, dass das Paket den Elementarverarbeitungen unterzogen wurde.

## Claims

1. Device for processing a sequence of information packets, **characterized in that** it comprises a packets memory (35), organized as a stack, in which the packets (30) of the sequence are stowed away in association with respective processing labels (36), a plurality of processing modules (M1 - M5), and supervisory means (37) receiving the processing label associated with each packet extracted from the packets memory and activating one of the processing modules selected as a function of the label received, the activated module undertaking an elementary processing of the extracted packet, and **in that** the elementary processing undertaken by at least one of the processing modules (M2, M3) comprises the associating of the extracted packet with a label modified in accordance with a labels translation table (T2, T3), the processed packet subsequently being stowed away again in the packets memory (35) in association with the modified label.

2. Device according to claim 1, wherein a first processing label is associated initially with each packet (30) of the sequence, wherein the supervisory means (37) activate a filtering module (M1) forming part of the plurality of processing modules in response to the receipt of the first processing label, and wherein the elementary processing undertaken by the filtering module comprises an analysis of a header of the packet extracted and the associating of the packet with a second processing label dependent on the result of the analysis.

3. Device according to claim 1 or 2, wherein the plurality of processing modules comprises an output module (M5) which transmits the extracted packet to an output of the device, with a signature based on a secret shared with a concentrating router (12) of a telecommunication network (10), authenticating that the packet has been subjected to the processing operations performed by the device (24).

4. Method of processing a sequence of information packets, **characterized in that** the packets (30) of the sequence are stowed away in a packets memory (35) organized as a stack, in association with respective processing labels (36), the processing label associated with each packet extracted from the packets memory is examined so as to activate a processing module selected as a function of the label received from a plurality of processing modules (M1 - M5), the activated module undertaking an elementary processing of the packet extracted, and **in that** the elementary processing undertaken by at least one of the processing modules (M2, M3) comprises the associating of the extracted packet with a label modified in accordance with a labels translation table (T2, T3), the processed packet subsequently being stowed away again in the packets memory in association with the modified label.

5. Method according to claim 4, wherein, after having been subjected to various elementary processing operations, each packet is delivered with a signature based on a secret shared with a concentrating router (12) of a telecommunication network (10), authenticating that the packet has been subjected to said elementary processing operations.
